# EUROPÄISCHE PATENTANMELDUNG

(11) **EP 2 030 875 A2**
(43) Veröffentlichungstag der Anmeldung: **04.03.2009**
(21) Anmeldenummer: 08013728.4
(22) Anmeldetag: 31.07.2008
(51) Int. Cl.: B62D 33/077, B62D 33/06

(54) **Lagerbefestigung**

(30) Priorität: 03.09.2007 DE 102007041647
(71) Anmelder: ThyssenKrupp Technologies AG, 45128 Essen (DE)
(72) Erfinder: Betsch, Hans-Joachim, 59174 Kamen (DE); Schmidt, Axel, 56457 Hergenroth (DE); Schröter, Detlef, 45473 Mühlheim a.d. Ruhr (DE)
(74) Vertreter: Adams, Steffen

(57) **Zusammenfassung**

Die Erfindung betrifft ein Fahrerhauslager für Nutzfahrzeuge, umfassend einen Stützarm (5), der um eine drehbar gelagerte Schwenkachse (9) schwenkbar mit dem Fahrzeugrahmen verbunden ist und an dem sich das Fahrerhaus abstützt, wobei der Stützarm (5) zwei gabelförmig angeordnete Zapfen (7, 8) aufweist, die über die Schwenkachse (9) miteinander verbunden sind, wobei der eine Zapfen (7) ein Durchgangsloch (10) aufweist, durch das die Schwenkachse (9) einführbar ist und in dem ein erstes Ende der Schwenkachse (9) über ein erstes Wälzlager (14) drehbar gelagert ist, und wobei der andere Zapfen (8) ein zweites Loch (11) zur drehbaren Aufnahme des zweiten Endes der Schwenkachse (9) aufweist. Um ein solches Fahrerhauslager derart weiterzubilden, dass eine spielfreie, reibungsarme und komfortable Fahrerhauslagerung erreicht wird, wird erfindungsgemäß vorgeschlagen, dass die Schwenkachse (9) über Wälzlager (14, 15) drehbar gelagert ist und die Wälzlager (14, 15) gegeneinander verspannt sind

## Beschreibung

Die Erfindung betrifft ein Fahrerhauslager für Nutzfahrzeuge nach dem Oberbegriff des Patentanspruchs 1.

Derartige gattungsgemäße Fahrerhauslager sind aus der Praxis bekannt. Sie sind gekennzeichnet durch eine lediglich einseitige Zugänglichkeit für das Einführen und Befestigen der Schwenkachse, denn die Schwenkachse lässt sich nur durch das Durchgangsloch einführen und in die Montageposition bringen. An den das zweite Loch aufweisenden Zapfen des Stützarms ist bei den aus der Praxis bekannten Fahrerhauslagern ein Stabilisator angebunden, über den die beiden das Fahrerhaus abstützenden Fahrerhauslager miteinander gekoppelt sind. Da somit das zweite Loch für den Monteur unzugänglich ist, wird bei den bekannten Fahrerhauslagern die Schwenkachse lediglich in das mit einem Innengewinde versehene zweite Loch eingeschraubt. Um die Schwenkachse herum ist eine Gummi-Metall-Hülse angeordnet, durch die das Fahrerhauslager in allen drei Raumrichtungen eine gewünschte Elastizität aufweist, um den Komfort der Fahrerhauslagerung zu erhöhen.

Nachteilig bei diesen bekannten Fahrerhauslagern ist, dass die Schwenkbewegung um die Schwenkachse reibungsbehaftet und damit komforteinschränkend und verschleißerhöhend ist, denn die Gummi-Metall-Hülse ist lediglich über ein einfaches Gleitlager drehbar um die Schwenkachse gelagert. Nachteilig ist weiterhin, dass diese Lageranordnung ein unerwünschtes Spiel in Längsrichtung der Schwenkachse aufweist. Dieses Spiel wirkt ebenfalls verschleißerhöhend und komfortmindernd, weil unkontrollierte Bewegungen des Fahrerhauses möglich sind.

Der Erfindung liegt die Aufgabe zu Grunde, ein Fahrerhauslager nach dem Oberbegriff des Patentanspruchs 1 derart weiterzubilden, dass eine spielfreie, reibungsarme und komfortable Fahrerhauslagerung erreicht wird.

Diese Aufgabe wird gelöst durch ein Fahrerhauslager mit den Merkmalen des Patentanspruchs 1. Vorteilhafte Weiterbildungen sind in den Unteransprüchen angegeben.

Erfindungsgemäß ist vorgesehen, die Schwenkachse in Wälzlagern zu lagern und diese Wälzlager gegeneinander zu verspannen, so dass eine im Wesentlichen spielfreie und reibungsarme Lagerung der Schwenkachse erreicht wird. Hierzu wird nach einer erfindungsgemäßen Ausführungsform vorgeschlagen, dass ein erstes Ende der Schwenkachse über ein erstes Wälzlager und ein zweites Ende der Schwenkachse über ein zweites Wälzlager drehbar gelagert ist, und dass zwischen den beiden Wälzlagern eine Spannhülse angeordnet ist, über die die Wälzlager gegeneinander verspannt sind. Vorzugsweise ist das eine Wälzlager in dem Durchgangsloch und das andere Wälzlager in dem zweiten Loch angeordnet.

Nach einer Ausführungsform der Erfindung ist in dem Durchgangsloch ein erstes und in dem zweiten Loch ein zweites Wälzlager angeordnet, wobei die Enden der Schwenkachse über diese Wälzlager drehbar gelagert sind. Zwischen den beiden Wälzlagern ist eine Spannhülse angeordnet, über die die Wälzlager gegeneinander verspannt sind. Durch das in dem zweiten Loch angeordnete zweite Wälzlager wird eine reibungsarme drehbare Lagerung der Schwenkachse erreicht und der Verschleiß wird gegenüber der aus dem Stand der Technik bekannten Lagerung, die über ein einfaches Gleitlager gebildet ist und größere Reibungskräfte aufweist, stark reduziert. Ebenfalls sitzt die Schwenkachse durch die Anordnung des die Schwenkachse aufnehmenden zweiten Wälzlagers, das in dem zweiten Loch angeordnet ist, in radialer Richtung spielfrei in dem zweiten Loch. Über die zwischen dem ersten und dem zweiten Wälzlager angeordnete Spannhülse stützen sich die gegeneinander verspannten Wälzlager gegeneinander ab, so dass auch in axialer Richtung, d.h. in Richtung der Längsachse der Schwenkachse, kein Spiel mehr vorhanden ist. Auf diese Weise wird mit der erfindungsgemäßen Konstruktion eine spielfreie und reibungsarme Lagerung der Schwenkachse des Fahrerhauslagers erreicht.

Die Schwenkachse ist gemäß einer ersten Ausführungsform der Erfindung vorteilhaft zweiteilig ausgebildet und besteht aus einer zentralen Schraube, die von einer Schwenkhülse umgeben ist.

Nach einer besonders vorteilhaften Ausgestaltung der ersten Ausführungsform der Erfindung werden die beiden Wälzlager zwischen zwei Kragen verspannt, wobei der eine Kragen an der Schwenkhülse und der andere Kragen an einer Schiebehülse angeordnet ist. Die Schiebehülse weist eine zentrale Bohrung mit Innengewinde auf, in das ein Außengewinde der Schraube der Schwenkachse eingeschraubt ist. Durch das Einschrauben der Schraube in die Schiebehülse werden die beiden Kragen aufeinander zu bewegt, und die beiden zwischen den Kragen angeordneten Wälzlager werden unter Einbeziehung der Spannhülse gegeneinander verspannt.

Damit die Relativbewegung zwischen der Schiebehülse und der Schwenkhülse ermöglicht wird, ist erfindungsgemäß vorgesehen, dass die Schwenkhülse eine Ausnehmung aufweist, in welcher die Schiebehülse in Richtung Längsachse der Schwenkachse verschiebbar angeordnet ist. Diese Ausnehmung kann zum Beispiel als einfache zylindrische Ausnehmung ausgebildet sein. Nach einer bevorzugten Ausführungsform ist jedoch vorgesehen, dass die Innenkontur der Ausnehmung der Schwenkhülse und die Außenkontur der Schiebehülse im Bereich der Ausnehmung so gestaltet sind, dass sich zwischen der Schiebehülse und der Schwenkhülse eine im Umfangsrichtung wirksame formschlüssige Verbindung ausbildet, durch die die Schiebehülse gegen Verdrehung gesichert wird. Auf diese Weise kann die Schraube der Schwenkachse in das Innengewinde der Schiebehülse eingeschraubt werden, ohne dass sich die Schiebehülse relativ zu der Schwenkhülse verdreht bzw. sich mit der Schraube mitdreht.

Ein verdrehsicheres Einschrauben der Schraube der Schwenkachse lässt sich erfindungsgemäß nach einer zweiten Ausführungsform der Erfindung auch dadurch sicherstellen, dass im Bereich des zweiten Loches Formschlusselemente angeordnet sind, welche die Schiebehülse zumindest zu Beginn der Schwenkachsenmontage verdrehsicher in Montageposition halten. Die Formschlusselemente sind ortsfest in dem zweiten Loch angeordnet und können vorteilhaft als einfache Stifte ausgebildet sein, die einerseits in Bohrungen des zweiten Loches und andererseits in Bohrungen der Schiebehülse eingreifen, so dass diese zumindest zu Beginn der Schwenkachsenmontage formschlüssig und verdrehsicher in dem zweiten Loch angeordnet ist. Zu Beginn der Montage der Schwenkachse kann dann die Schiebehülse in das mit den Formschlusselementen ausgestattete zweite Loch eingelegt werden, so dass die Formschlusselemente die Schiebehülse verdrehsicher in Montageposition halten. Die Schraube der Schwenkachse kann dann in das Innengewinde der verdrehsicher gehaltenen Schiebehülse eingeschraubt werden.

Nach einer vorteilhaften Ausgestaltung der zweiten Ausführungsform der Erfindung ist die Schiebehülse als einfacher zylindrischer Ring ausgebildet, der eine zentrale Bohrung mit Innengewinde aufweist. Bei dieser Konstruktion muss die Schiebehülse keinen Kragen aufweisen, sondern sie stützt sich mit ihrer dem fahrzeuginneren Wälzlager zugewandten Stirnfläche auf dem Innenring des Wälzlagers ab.

Bei der zweiten Ausführungsform der Erfindung ist die Schwenkachse durch einen Gewindebolzen gebildet, der an beiden Enden Gewindeabsätze trägt. Der eine Gewindeabsatz wird in das Innengewinde der Schiebehülse eingeschraubt und auf den anderen Gewindeabsatz wird eine Mutter aufgeschraubt. Die Mutter stützt sich über eine Spannscheibe, die als einfache kreisringförmige Metallscheibe ausgebildet sein kann, auf dem Innenring des Fahrzeugäußeren Wälzlagers ab, so dass die Wälzlager zwischen der Mutter mit der Spannscheibe und der Schiebehülse verspannt sind.

Um eine gewisse Elastizität der Fahrerhauslagerung in den drei Raumrichtungen (x-, y- und z-Richtung) zu erreichen, ist bei beiden Ausführungsformen der Erfindung eine Gummi-Metall-Hülse vorgesehen, die einen metallischen Innenring, eine radial außen angeordnete Gummischicht und eine diese Gummischicht umgebende äußere Metallhülse aufweist. Die metallische Innenhülse dieser Gummi-Metall-Hülse wirkt dabei als Spannhülse zwischen den beiden Wälzlagern. Die Gummischicht ist auf den Außenmantel der metallischen Innenhülse aufvulkanisiert. Die Gummischicht ist umgeben von einer äußeren Metallhülse, die ihrerseits in eine Bohrung eines ringförmigen Verbindungsteils eingepresst ist, das fest mit dem Fahrzeugrahmen verbunden ist. Das Verbindungsteil kann vorteilhaft als Gussteil ausgebildet sein. Zwischen den gabelförmigen Zapfen des Stützarms und der Gummi-Metall-Hülse sind elastische Zwischenscheiben vorgesehen, um auch eine gewünschte Elastizität der Fahrerhauslagerung in Längsrichtung der Schwenkachse zu erreichen.

Im Folgenden wird die Erfindung anhand einer Zeichnung näher erläutert. Im Einzelnen zeigen
- Fig. 1: den grundsätzlichen Aufbau einer Fahrerhauslagerung in der Drauf- sicht,
- Fig. 2: eine erste Ausführungsform des erfindungsgemäßen Fahrerhaus- lagers,
- Fig. 2a, 2b: eine perspektivische Ansicht der Schwenkhülse und der Schiebe- hülse, die bei der ersten Ausführungsform der Erfindung zum Einsatz kom- men,
- Fig. 3: eine gegenüber Fig. 2 abgewandelte zweite Ausführungsform des er- findungsgemäßen Fahrerhauslagers.

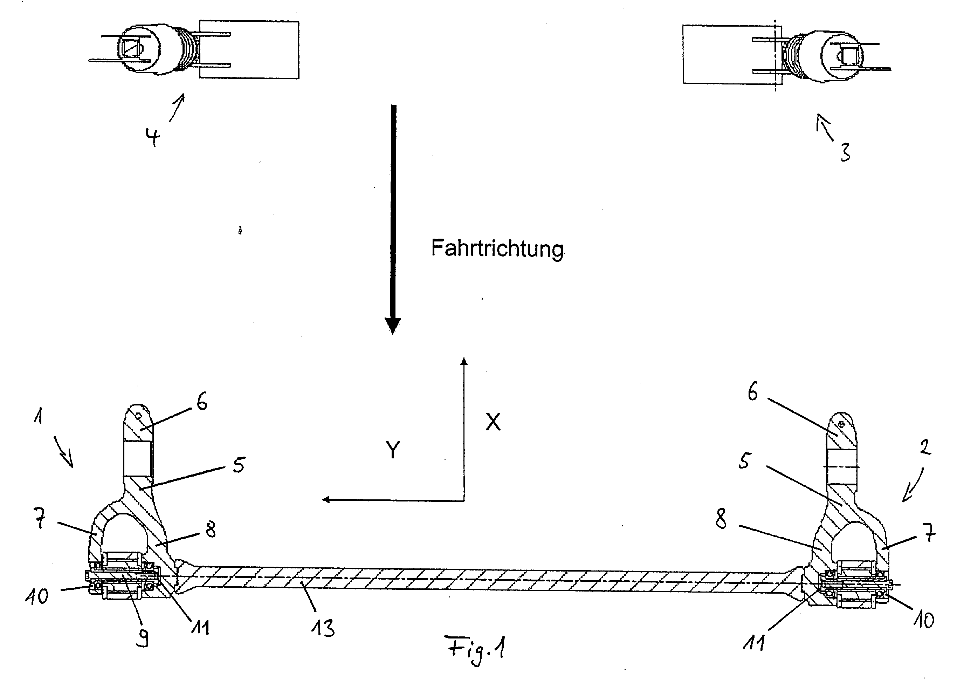

In Fig. 1 ist der grundsätzliche Aufbau einer Fahrerhauslagerung für Nutzfahrzeuge dargestellt. Das nicht dargestellte Fahrerhaus ist über vier Fahrerhauslager 1, 2, 3, 4 gelagert. Die beiden in Fahrtrichtung gesehen vorderen Fahrerhauslager 1, 2 weisen jeweils einen Stützarm 5 auf. Der Stützarm 5 besitzt einen Tragarm 6, der über nicht dargestellte Verbindungsmittel mit dem Fahrerhaus verbunden ist. In Fahrtrichtung gesehen verzweigt sich der Tragarm 6 in zwei gabelförmig angeordnete Zapfen 7, 8. Die beiden Zapfen 7, 8 sind über eine Schwenkachse 9 miteinander verbunden. Der konstruktive Aufbau der Schwenkachse 9 wird nachstehend noch genauer beschrieben.

Der jeweils von der Fahrzeugmittellinie aus gesehen auf der Fahrzeugaußenseite angeordnete Zapfen 7 (im Folgenden als "fahrzeugäußerer Zapfen 7" bezeichnet) weist ein Durchgangsloch 10 auf, durch das die Schwenkachse 9 eingeführt werden kann. Auf der dem fahrzeugäußeren Zapfen 7 zugewandten Innenseite des fahrzeuginneren Zapfens 8 ist ein zweites Loch 11 vorgesehen, das im dargestellten Ausführungsbeispiel als Sackloch ausgebildet ist und in das die Schwenkachse 9 eingeführt ist. Grundsätzlich kann das zweite Loch 11 auch als Durchgangsloch ausgebildet sein. In jedem Fall ist das zweite Loch 11 jedoch wegen des an dem fahrzeuginneren Zapfen 8 befestigten Stabilisators 13 für den Monteur nicht zugänglich.

Sowohl im Durchgangsloch 10 als auch im zweiten Loch 11 ist ein Wälzlager angeordnet, über das die Schwenkachse 9 drehbar und reibungsarm gelagert ist. Die beiden fahrzeuginneren Zapfen 8 des linken und rechten vorderen Fahrerhauslagers sind über einen Stabilisator 13 miteinander gekoppelt. Bei einer derartigen Konstruktion ist wegen der Anbindung des Stabilisators 13 nur eine einseitige Zugänglichkeit des zweiten Loches 11 für die Montage der Schwenkachse 9 gegeben, denn die Schwenkachse 9 kann nur von der fahrzeugäußeren Seite her durch das Durchgangsloch 10 in das zweite Loch 11 eingeführt werden.

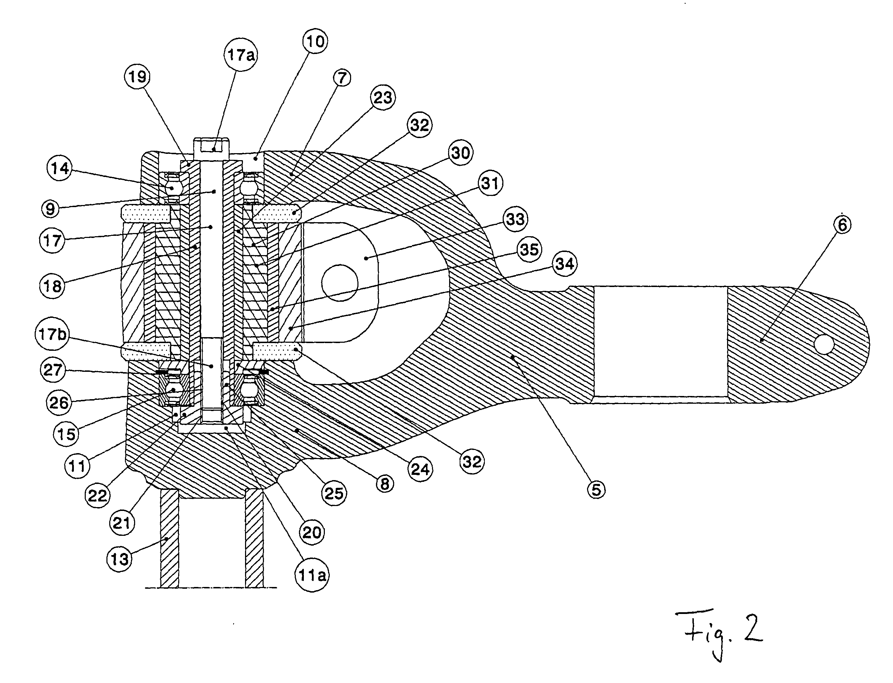

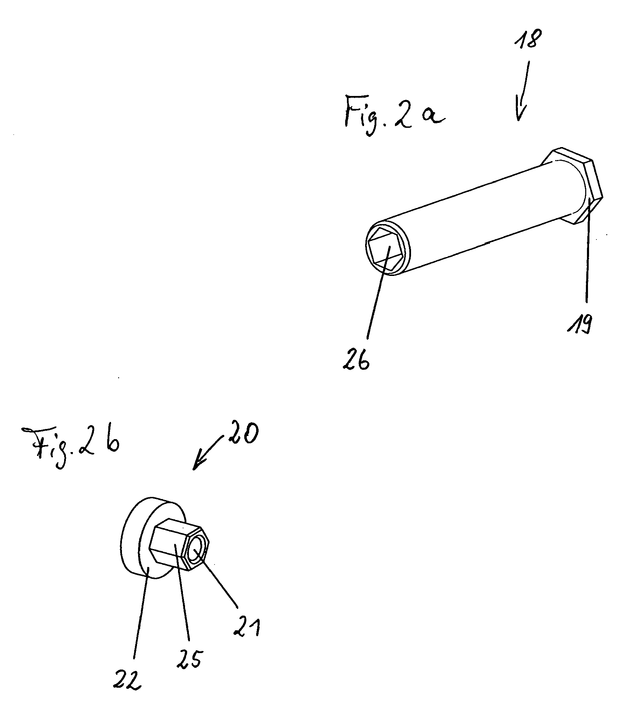

Fig. 2 zeigt eine erste Ausführungsform des erfindungsgemäßen Fahrerhauslagers. Die Schwenkachse 9, über die die beiden Zapfen 7, 8 des Stützarms 5 miteinander verbunden sind, ist über zwei Wälzlager 14, 15 drehbar gelagert. Das eine Wälzlager 14 ist in das Durchgangsloch 10 des fahrzeugäußeren Zapfens 7 eingesetzt, während des andere Wälzlager 15 in das zweite Loch 11 des fahrzeugäußeren Zapfens 8 eingesetzt ist.

Die Schwenkachse 9 ist zweiteilig ausgebildet. Sie umfasst eine zentrale Schraube 17 und eine diese umgebende Schwenkhülse 18. Die Innenringe der Wälzlager 14, 15 stützen sich auf dem Mantel einer Schwenkhülse 18 ab, während sich die Außenringe der Wälzlager 14, 15 an der Innenwand des Durchgangsloches 10 bzw. des zweiten Loches 11 abstützen. Die Schwenkhülse 18 weist fahrzeugaußenseitig einen Kragen 19 auf, der sich auf dem Innenring des in dem Durchgangsloch 10 angeordneten Wälzlagers 14 abstützt. Die Schraube 17 stützt sich mit ihrem Schraubenkopf 17a auf der Schwenkhülse 18 ab.

In dem zweiten Loch 11 ist eine Schiebehülse 20 angeordnet. Die Schiebehülse 20 weist eine zentrale Bohrung 21 mit einem Innengewinde auf, in das das Außengewinde 17b der Schraube 17 eingeschraubt ist. Weiter weist die Schiebehülse 20 einen fahrzeuginnenseitig angeordneten Kragen 22 auf, der sich gegen den Innenring des in dem zweiten Loch 11 angeordneten Wälzlagers 15 abstützt. Zwischen den Innenringen der Wälzlager 14, 15 ist eine Spannhülse 23 angeordnet, über die sich die Innenringe der Wälzlager 14, 15 gegeneinander abstützen. In dem dargestellten Ausführungsbeispiel ist zwischen dem Innenring des fahrzeuginneren Wälzlagers 15 und der Spannhülse 23 eine Metallscheibe 24 angeordnet, durch die der Innenring des Wälzlagers 15 in Axialrichtung festgesetzt wird. Der Außenring des Wälzlagers 15 wird durch den Sprengring 27 in Axialrichtung festgelegt. Dadurch ist das fahrzeuginnere Wälzlager 15 als Festlager ausgebildet, während das fahrzeugäußere Wälzlager 14 als Loslager ausgebildet ist. Dies könnte jedoch auch umgekehrt sein, ohne dass dadurch das Prinzip der vorliegenden Erfindung berührt wird.

Durch die vorstehend beschriebene Anordnung können die Innenringe der Wälzlager 14, 15 im Wesentlichen spielfrei gegeneinander verspannt werden. Dazu wird die Schraube 17 mit ihrem Außengewinde 17b in das Innengewinde der zentralen Bohrung 21 der Schiebehülse 20 eingeschraubt. Damit das Einschrauben gelingt und sich die Schiebehülse 20 nicht mitdreht ist die Schiebehülse 20 mit einem Schaft 25 ausgebildet, der mittels einer in Umfangsrichtung wirksamen formschlüssigen Verbindung in einer Ausnehmung 26 der Schwenkhülse 18 geführt ist. Auf diese Weise kann die Schiebehülse 20 geführt in der Ausnehmung 26 der Schwenkhülse 18 verschoben werden und gleichzeitig ist sie gegen ein Verdrehen beim Einschrauben der Schraube 17 gesichert. Durch das Einschrauben der Schraube 17 in die Schiebehülse 20 wird der fahrzeuginnenseitige Kragen 22 der Schiebehülse 20 auf den fahrzeugaußenseitigen Kragen 19 der Schwenkhülse 18 zu bewegt. Dabei werden die Innenringe der Wälzlager 14, 15 unter Einklemmung der dazwischen angeordneten Spannhülse 23 und der elastischen Scheibe 24 gegeneinander verspannt. Aufgrund dieser Verspannung ist eine Relativbewegung zwischen den Wälzlagern 14, 15 in Schwenkachsenlängsrichtung nicht mehr möglich. Auch in radialer Richtung, d.h. senkrecht zur Schwenkachsenlängsrichtung, ist wegen der Abstützung der Außenringe der Wälzlager 14, 15 in dem Durchgangsloch 10 bzw. in dem zweiten Loch 11 kein Spiel für die Schwenkachse 9 vorhanden. Die Schwenkachse 9 ist daher spielfrei und reibungsarm drehbar gelagert.

Wegen der spielfreien und reibungsarmen Lagerung der Schwenkachse 9 mittels der gegeneinander verspannten Wälzlager 14, 15 wird eine signifikante Verringerung des Verschleißes des Fahrerhauslagers und damit eine Standzeitverlängerung erreicht. Auch wird der von den Insassen des Fahrerhauses empfundene Fahrkomfort erhöht, weil keine unerwünschten und unkontrollierten Bewegungen der Schwenkachse 9 mehr möglich sind.

In dem dargestellten Ausführungsbeispiel ist die Spannhülse 23 als metallene Innenhülse einer Gummi-Metall-Hülse 30 ausgebildet. Die Gummi-Metall-Hülse 30 umfasst neben der aus Metall bestehenden, als Spannhülse 23 dienenden Innenhülse eine auf dem Außenmantel der Spannhülse 23 angeordnete Gummischicht 31, die auf die Spannhülse 23 aufvulkanisiert ist. Die Gummischicht 31 ist von einer weiteren Metallhülse 35 umgeben, wobei die Gummischicht 31 und die Metallhülse 35 durch Vulkanisieren miteinander verbunden sind. Zwischen dem Zapfen 7 und dem Zapfen 8 einerseits und der Gummi-Metall-Hülse 30 andererseits sind elastische Zwischenscheiben 32 angeordnet. Außerdem weist das Fahrerhauslager einen mit einer Lasche 33 versehenen Ring 34 auf, der als Gussteil ausgebildet sein kann. Über die Lasche 33 ist die Schwenkachse 9 mit dem (nicht dargestellten) Fahrzeugrahmen verbunden. In die zentrale Öffnung des Ringes 34 ist die äußere Metallhülse 35 der Gummi-Metall-Hülse 30 eingepresst, so dass die Gummi-Metall-Hülse 30 verdrehfest in dem Ring 34 gehalten ist. Durch diese Konstruktion wird eine gewisse, gewünschte Elastizität des Fahrerhauslagers in alle drei Raumrichtungen (x-, y- und z-Richtung) erreicht.

Um die in Fig. 2 dargestellte Schwenkachse 9 zu montieren wird zunächst die Schiebehülse 20 in das zweite Loch 11 eingesetzt. Dazu weist das zweite Loch 11 einen kleinen Aufnahmeraum 11a auf, in den der Kragen 22 der Schiebehülse 20 hineinpasst. Anschließend wird das Wälzlager 15 in das zweite Loch 11 eingesetzt, mit einem Sprengring fixiert, und die Scheibe 24 wird eingelegt. Als nächstes wird die Gummi-Metall-Hülse 30 von der offenen Seite des gabelförmigen Stützarms 5 zwischen dessen Zapfen 7, 8 eingebracht. Dabei wird darauf geachtet, dass die Innenhülse der Gummi-Metall-Hülse 30 mit den Innenringen der Wälzlager 14, 15 fluchtet, so dass sie als Spannhülse 18 wirken kann, d.h. sich im verspannten Zustand an den Innenringen der Wälzlager 14, 15 abstützen kann. Nun wird die Schwenkhülse 18 in die zentrale Öffnung der Innenhülse der Gummi-Metall-Hülse 30 eingeschoben, und zwar so, dass die Ausnehmung 26 der Schwenkhülse 18 den Schaft 25 der Schiebehülse 20 formschlüssig aufnimmt. Dadurch wird die Schiebehülse 20 in Umfangsrichtung verdrehsicher in der Schwenkhülse 18 gehalten. Der Kragen 19 der Schwenkhülse 18 stützt sich unmittelbar auf dem Innenring des fahrzeugäußeren Wälzlagers 14 ab. Schließlich wird die Schraube 17 mit ihrem Außengewinde 17b in das Innengewinde der Schiebehülse 20 eingeschraubt. Die Schiebehülse 20 ist verdrehsicher und in Längsrichtung verschiebbar in der Ausnehmung 26 der Schwenkhülse 18 angeordnet, so dass durch das Einschrauben der Schraube 17 die Schiebehülse 20 auf den Schraubenkopf 17a zu bewegt wird, bis sich der Kragen 22 der Schiebehülse 20 an den Innenring des Wälzlagers 15 anlegt. Durch Festziehen der Schraube 17 mit einem vorgebbaren Drehmoment werden dann die beiden Wälzlagerinnenringe und damit auch die gesamten Wälzlager 14, 15 gegeneinander verspannt, wobei die als Innenhülse der Gummi-Metall-Hülse 30 ausgebildete Spannhülse 23 zwischen den Wälzlagerinnenringen eingespannt wird.

In den Fig. 2a ist die Schwenkhülse 18 und in Fig. 2b ist die Schiebehülse 20 in einer perspektivischen Ansicht dargestellt, um das Funktionsprinzip der Verspannung bei der ersten Ausführungsform der Erfindung zu veranschaulichen. Zu erkennen ist in Fig. 2a der Kragen 19, mit dem sich die Schwenkhülse 18 fahrzeugaußenseitig auf dem Innenring des Wälzlagers 14 abstützt, und die Ausnehmung 26, die einen Innensechskant aufweist und in die der Schaft 25 der Schiebehülse 20 (siehe Fig. 2b) einführbar ist. Die Schiebehülse 20 stützt sich mit ihrem Kragen 22 auf dem Innenring des fahrzeuginnenseitig angeordneten Wälzlagers 15 ab. Die Schiebehülse 20 weist ferner eine zentrale Bohrung 21 auf, in die die Schraube 17 einschraubbar ist. Da sich einerseits die Schraube 17 mit ihrem Schraubenkopf auf der äußeren Stirnfläche der Schwenkhülse 18 abstützt und andererseits die Schiebehülse verdrehsicher und axial verschiebbar in der Ausnehmung 26 gehalten ist, wird durch Einschrauben der Schraube 17 der Abstand zwischen den beiden Kragen 19, 22 verringert und so die spielfreie Verspannung der beiden Lager 14, 15 ermöglicht.

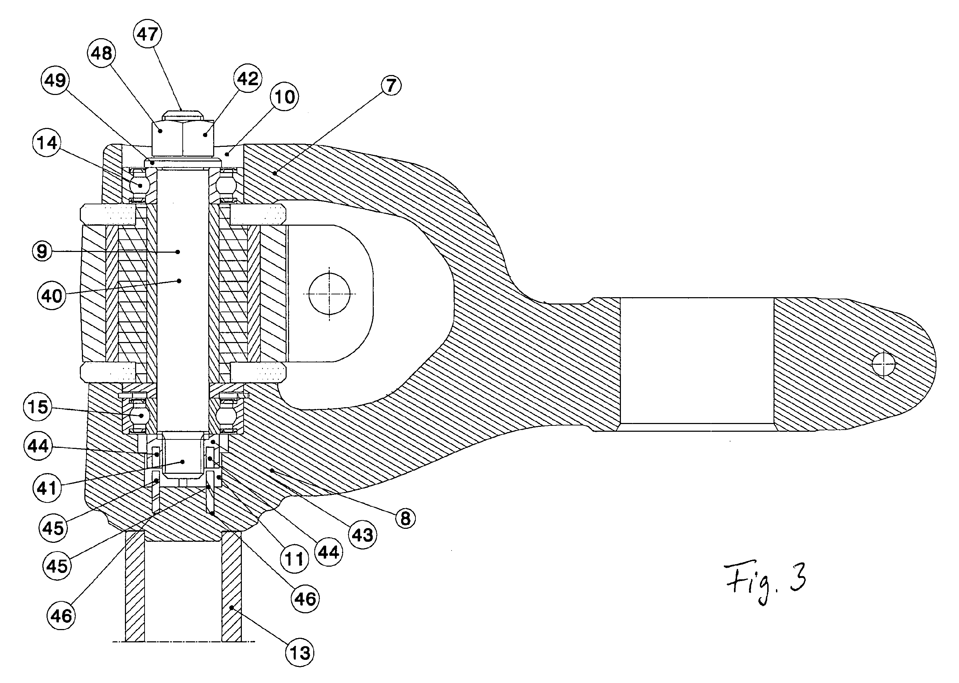

Fig. 3 zeigt eine Ausführungsform der Erfindung, die gegenüber der in Fig. 2 dargestellten Ausführungsform abgewandelt ist. Das grundsätzliche Funktionsprinzip für das Verspannen der Wälzlager 14, 15 gegeneinander, wie es vorstehend zu Fig. 2 erläutert wurde, gilt auch für die abgewandelte Ausführungsform gemäß Fig. 3.

Bei der abgewandelten Ausführungsform nach Fig. 3 weist die Schwenkachse 9 keine eine Schraube umgebende Schwenkhülse auf, sondern die Schwenkachse 9 ist durch einen Gewindebolzen 40 gebildet, der einen schiebehülsenseitigen Gewindeabsatz 41 und einen fahrzeugaußenseitigen Gewindeabsatz 42 aufweist. Die Schiebehülse 43 ist hier als einfacher zylindrischer Ring ausgebildet, der eine zentrale Bohrung mit Innengewinde und mindestens zwei Bohrungen 44 zur Aufnahme von Sicherungsstiften 45 aufweist. Gleichzeitig weist das zweite Loch 11 ebenfalls Bohrungen 46 auf, in denen die Sicherungsstifte 45 stecken. Wird die ringförmige Schiebehülse 43 zu Beginn der Montage in das zweite Loch 11 eingelegt, dann greifen die in den Bohrungen 46 steckenden Sicherungsstifte 45 in die Bohrungen 44 der Schiebehülse 43 ein und verhindern ein Verdrehen der Schiebehülse 43 in Umfangsrichtung, wenn der schiebehülsenseitige Gewindeabsatz 41 in das Innengewinde der zentralen Bohrung der Schiebehülse 43 eingeschraubt wird (Verdrehsicherung). Bei dieser Ausführungsform weist die Schiebehülse 43 keinen Kragen auf, sondern wirkt mit ihrer wälzlagerseitigen Stirnfläche unmittelbar auf den Innenring des Wälzlagers 15.

Der fahrzeugaußenseitige Gewindeabsatz 42 weist einen Innensechskant 47 auf, durch den der Gewindebolzen 40 in die Schiebehülse 43 eingeschraubt werden kann. Auf den fahrzeugaußenseitigen Gewindeabsatz 42 ist eine Mutter 48 aufgeschraubt. Die Mutter 48 wirkt über eine Spannscheibe 49 auf den Innenring des Wälzlagers 14 ein. Auf diese Weise ersetzt die Kombination aus Mutter 48 und Spannscheibe 49 bei der Ausführungsform gemäß Fig. 3 die Kombination aus Kragen 19 der Schwenkhülse 18 und Schraubenkopf 17a bei der Ausführungsform gemäß Fig. 2. Bei der Ausführungsform gemäß Fig. 3 kann der Vorteil einerseits darin gesehen werden, dass die Schiebehülse einfacher ausgebildet werden kann als bei der Ausführungsform nach Fig. 2, denn es ist kein Kragen an der Schiebehülse 43 erforderlich, um die Einspannung der Wälzlager 14, 15 zu erreichen. Andererseits kann auf die gemäß Fig. 2 vorgesehene Schwenkhülse 18 mit dem Kragen 19 verzichtet werden. Stattdessen genügt eine einfache Mutter 48 und eine einfache Spannscheibe 49, um das fahrzeugaußenseitige Widerlager für die gegenseitige Verspannung der Wälzlager zu realisieren.

Die Montage des Fahrerhauslagers gemäß Fig. 3 erfolgt analog zu der Montage beim Ausführungsbeispiel nach Fig. 2.

## Patentansprüche

1. Fahrerhauslager für Nutzfahrzeuge, umfassend einen Stützarm (5), der um eine drehbar gelagerte Schwenkachse (9) schwenkbar mit dem Fahrzeugrahmen verbunden ist und an dem sich das Fahrerhaus abstützt, wobei der Stützarm (5) zwei gabelförmig angeordnete Zapfen (7, 8) aufweist, die über die Schwenkachse (9) miteinander verbunden sind, wobei der eine Zapfen (7) ein Durchgangsloch (10) aufweist, durch das die Schwenkachse (9) einführbar ist, wobei die Schwenkachse (9) in einem in dem anderen Zapfen (8) angeordneten zweiten Loch (11) gehalten ist, und wobei um die Schwenkachse (9) eine Gummi-Metall-Hülse (30) angeordnet ist, über die die Schwenkachse (9) mit dem Fahrzeugrahmen elastisch gekoppelt ist, **dadurch gekennzeichnet, dass** die Schwenkachse (9) über Wälzlager (14, 15) drehbar gelagert ist und die Wälzlager (14, 15) gegeneinander verspannt sind.

2. Fahrerhauslager nach Anspruch 1, **dadurch gekennzeichnet, dass** ein erstes Ende der Schwenkachse (9) über ein erstes Wälzlager (14) und ein zweites Ende der Schwenkachse (9) über ein zweites Wälzlager (15) drehbar gelagert ist, und dass zwischen den beiden Wälzlagern (14, 15) eine Spannhülse (23) angeordnet ist, über die die Wälzlager (14, 15) gegeneinander verspannt sind.

3. Fahrerhauslager nach Anspruch 1 oder 2, **dadurch gekennzeichnet, dass** das eine Wälzlager (14) in dem Durchgangsloch (10) und das andere Wälzlager (15) in dem zweiten Loch (11) angeordnet ist.

4. Fahrerhauslager nach einem der Ansprüche 1 bis 3, **dadurch gekennzeichnet, dass** die Schwenkachse (9) eine Schraube (17) und eine die Schraube (17) umgebende Schwenkhülse (18) aufweist.

5. Fahrerhauslager nach Anspruch 4, **dadurch gekennzeichnet, dass** in dem zweiten Loch (11) eine Schiebehülse (20) mit einer ein Innengewinde aufweisenden zentralen Bohrung (21) angeordnet ist, dass in das Innengewinde ein Außengewinde (17b) der Schraube (17) eingeschraubt ist, und dass die Schiebehülse (20) einen ersten Kragen (22) und die Schwenkhülse (18) einen zweiten Kragen (19) aufweist, wobei die Wälzlager (14, 15) zusammen mit der Spannhülse (23) zwischen den beiden Kragen (22, 19) verspannt sind.

6. Fahrerhauslager nach Anspruch 5, **dadurch gekennzeichnet, dass** die Schwenkhülse (18) eine Ausnehmung (26) aufweist, in welcher die Schiebehülse (20) in Richtung Längsachse der Schwenkachse verschiebbar angeordnet ist.

7. Fahrerhauslager nach Anspruch 6, **dadurch gekennzeichnet, dass** die Schiebehülse (20) formschlüssig in der Ausnehmung (26) der Schwenkhülse (18) geführt ist, so dass durch den Formschluss eine Verdrehsicherung der Schiebehülse (20) erfolgt.

8. Fahrerhauslager nach einem der Ansprüche 1 bis 7, **dadurch gekennzeichnet, dass** im Bereich des zweiten Lochs (11) Formschlusselemente (45) angeordnet sind, welche die Schiebehülse (20, 43) zumindest zu Beginn der Schwenkachsenmontage verdrehsicher in Montageposition halten.

9. Fahrerhauslager nach Anspruch 8, **dadurch gekennzeichnet, dass** die Formschlusselemente (45) als Stifte ausgebildet sind, die ortsfest in dem zweiten Loch (11) angeordnet sind und in Bohrungen (44) der Schiebehülse (20, 43) eingreifen, so dass diese zumindest zu Beginn der Schwenkachsenmontage formschlüssig und verdrehsicher in dem zweiten Loch (11) angeordnet ist.

10. Fahrerhauslager nach Anspruch 9, **dadurch gekennzeichnet, dass** die Schiebehülse (43) als zylindrischer Ring ausgebildet ist, der eine zentrale Bohrung mit Innengewinde und an seiner fahrzeuginneren Stirnfläche die Bohrungen (44) aufweist.

11. Fahrerhauslager nach Anspruch 9 oder 10, **dadurch gekennzeichnet, dass** die Schiebehülse (43) sich mit ihrer fahrzeugaußenseitigen Stirnfläche auf dem Innenring des Wälzlagers (15) abstützt.

12. Fahrerhauslager nach einem der Ansprüche 8 bis 11, **dadurch gekennzeichnet, dass** die Schwenkachse (9) durch einen Gewindebolzen (40) gebildet ist, der einen schiebehülsenseitigen Gewindeabsatz (41) zum Einschrauben in die Schiebehülse (20, 43) und einen fahrzeugaußenseitigen Gewindeabsatz (42) aufweist.

13. Fahrerhauslager nach Anspruch 12, **dadurch gekennzeichnet, dass** auf den fahrzeugaußenseitigen Gewindeabsatz (42) eine Mutter (48) aufgeschraubt ist, die sich über eine Spannscheibe (49) auf dem Innenring des Wälzlagers (14) abstützt.

14. Fahrerhauslager nach einem der voranstehenden Ansprüche, **dadurch gekennzeichnet, dass** die Spannhülse (23) als metallische Innenhülse einer Gummi-Metall-Hülse (30) ausgebildet ist.

15. Fahrerhauslager nach Anspruch 14, **dadurch gekennzeichnet, dass** auf dem Außenmantel der Spannhülse (23) eine Gummischicht (31) angeordnet ist, die von einer äußeren Metallhülse (35) umgeben ist.

16. Fahrerhauslager nach Anspruch 15, **dadurch gekennzeichnet, dass** die äußere Metallhülse (35) der Gummi-Metall-Hülse (30) in einen Ring (34) eingepresst ist, der seinerseits fest mit dem Fahrzeugrahmen verbunden ist.

17. Fahrerhauslager nach einem der Ansprüche 14 bis 16, **dadurch gekennzeichnet, dass** zwischen der Gummi-Metall-Hülse (30) und den Zapfen (7, 8) elastische Zwischenscheiben (32) angeordnet sind.

18. Fahrerhauslager nach einem der voranstehenden Ansprüche, **dadurch gekennzeichnet, dass** fahrzeugaußenseitig zwischen der Spannhülse (23) und dem Innenring des Wälzlagers (15) eine Metallscheibe (24) angeordnet ist, durch die der Innenring des Wälzlagers (15) axial fixiert gehalten wird.
